# EUROPÄISCHE PATENTANMELDUNG

(11) **EP 4 746 148 A1**
(43) Veröffentlichungstag der Anmeldung: **20.05.2026**
(21) Anmeldenummer: 25213062.0
(22) Anmeldetag: 03.11.2025
(51) Int. Cl.: H01M 50/204, H01M 50/383, H01M 50/342

(54) **BATTERIEEINHEIT MIT EINER MEHRZAHL VON BATTERIEZELLEN UND EINER VORRICHTUNG ZUM SCHUTZ VOR THERMISCHER PROPAGATION**

(30) Priorität: 19.11.2024 DE 102024133896
(71) Anmelder: Volkswagen Aktiengesellschaft, 38440 Wolfsburg (DE)
(72) Erfinder: Bohnsack, Alexander, 38440 Wolfsburg (DE); Cohrs, Malte, 38440 Wolfsburg (DE); Neumann, Niklas, 38440 Wolfsburg (DE)

(57) **Zusammenfassung**

Ein Batterieeinheit mit einer Mehrzahl von Batteriezellen (9), die in einer Reihenanordnung angeordnet sind, wobei die Batteriezellen (9) jeweils eine Mehrzahl von Batterieelementen und eine Batteriezellenumhüllung, die die Batterieelemente umgibt und die eine Entgasungsöffnung (23) aufweist, umfasst, und mit einer Schutzvorrichtung, die sich entlang der Reihenanordnung der Batteriezellen (9) erstreckt und dabei die Entgasungsöffnungen (23) überdeckt, wobei die Schutzvorrichtung zumindest eine Schaummaterialschicht (21) aufweist und wobei die Schutzvorrichtung mittels einer Verklebung stoffschlüssig mit den Batteriezellenumhüllungen verbunden ist

## Beschreibung

Die Erfindung betrifft eine Batterieeinheit mit einer Mehrzahl von Batteriezellen.

Eine Batterie ist ein Speicher für elektrische Energie auf elektrochemischer Basis, bei deren Entladung gespeicherte chemische Energie durch eine elektrochemische Redoxreaktion in elektrische Energie gewandelt wird. Eine Batterie kann eine oder, üblicherweise, mehrere Batterieelemente umfassen, die, zur Ausbildung einer Batteriezelle, innerhalb einer Umhüllung, üblicherweise in Form einer häufig als "Pouch" bezeichneten Folienumhüllung oder eines Gehäuses, angeordnet sind. Die Batterieelemente können jeweils zwei Elektroden, einen zwischen den Elektroden angeordneten Separator zur elektrischen Separierung der Elektroden und einen als lonenleiter dienenden Elektrolyten umfassen. Die zwei Elektroden eines Batterieelements können sich hinsichtlich eines jeweils umfassten Aktivmaterials unterscheiden, wodurch eine der Elektroden anodisch und die andere kathodisch wirksam ist. Weiterhin kann eine Batterie üblicherweise zwei Batteriepole umfassen, die in die Umhüllung integriert sind und die innenseitig der Umhüllung mit den Elektroden elektrisch leitend verbunden sind. Dabei können alle anodisch wirksamen Elektroden mit einem der Batteriepole und alle kathodisch wirksamen Elektroden mit dem anderen der Batteriepole verbunden sein.

Bei besonders hohen Leistungsanforderungen, wie dies beispielsweise für eine Traktionsbatterie eines Kraftfahrzeugs gilt, werden eine Vielzahl von Batteriezellen in einer oder mehreren Batterieeinheiten kombiniert, wobei für die Batteriezellen eine elektrische Reihen- und/oder Parallelschaltung vorgesehen sein kann. Häufig sind die Batteriezellen einer Batterieeinheit dabei auch mechanisch miteinander verbunden.

Von den Batteriezellen eines Kraftfahrzeugs, insbesondere wenn diese im Zusammenwirken miteinander als Traktionsbatterie des einen elektrifizierten Antriebstrang umfassenden Kraftfahrzeugs mit dann insgesamt relativ großer Batteriekapazität ausgebildet sind, kann ein erhebliches Gefährdungspotenzial ausgehen, wenn diese beispielsweise durch unsachgemäßem Gebrauch, interne Kurzschlüsse, Überladung, Überhitzung, Alterung oder aufgrund eines Unfalls des Kraftfahrzeugs zumindest teilweise beschädigt werden. Bei einer Beschädigung einer Batteriezelle besteht nämlich die Gefahr eines sogenannten thermischen Durchgehens, was auch als "thermal runaway" bezeichnet wird. Als thermisches Durchgehen wird grundsätzlich eine Überhitzung einer exothermen chemischen Reaktion oder einer technischen Apparatur aufgrund eines sich selbst verstärkenden, Wärme produzierenden Prozesses bezeichnet, der bei einer Batteriezelle insbesondere aus einem durch eine Beschädigung bewirkten internen Kurzschluss resultieren kann. Bei einer Batterieeinheit besteht zudem die Gefahr, dass ein thermisches Durchgehen einer Batteriezelle zu einer thermischen Propagation, d.h. zu einer Überhitzung auch der anderen Batteriezellen der Batterieeinheit in der Art einer Kettenreaktion, führt.

Die US 2020 / 0 212 384 A1 offenbart eine Batterieeinheit mit Sicherheitsmerkmalen zur Verringerung des Risikos einer thermischen Propagation. Die Batterieeinheit umfasst eine Schaumschicht mit mehreren Aussparungen. Darüber hinaus kann die Batterieeinheit ein Gehäuse umfassen, das die Schaumschicht und mehrere Batteriezellen aufnimmt. Weiterhin kann das Gehäuse einen Belüftungshohlraum enthalten, der in fluidleitender Verbindung mit den mehreren Aussparungen der Schaumschicht steht.

Die CN 117 219 953 A beschreibt eine Hitzeschutzplatte zur Verwendung in einem Gehäuse einer Batterieeinheit, wobei die Hitzeschutzplatte drei Schichten umfasst. Eine erste Schicht soll bei einer Beaufschlagung mit einem Heißgas gezielt zerstört werden. Eine Kernschicht kann aus einem Schaummaterial bestehen. Eine dritte Schicht kann eine Stahlplatte sein.

Der Erfindung liegt die Aufgabe zugrunde, die Gefahr einer thermischen Propagation bei einer Batterieeinheit zu verringern.

Diese Aufgabe ist bei einer Batterieeinheit, wie sie in dem Patentanspruch 1 der Patentanmeldung beansprucht ist, gelöst. Eine Schutzvorrichtung einer solchen Batterieeinheit sowie ein Batteriesystem mit einer solchen Batterieeinheit sind Gegenstände der Patentansprüche 13 und 14. Bevorzugte Ausgestaltungsformen der Batterieeinheit, der Schutzvorrichtung und des Batteriesystems sind Gegenstände der weiteren Patentansprüche und ergeben sich aus der nachfolgenden Beschreibung der Erfindung.

Eine erfindungsgemäße Batterieeinheit umfasst zumindest eine Mehrzahl von Batteriezellen, bei denen es sich insbesondere um Lithiumionen-Batteriezellen handeln kann und die in einer Reihenanordnung angeordnet sind. Die Batteriezellen weisen jeweils eine Mehrzahl von Batterieelementen auf. Die Batterieelemente können jeweils zwei Elektroden, einen zwischen den Elektroden angeordneten Separator zur elektrischen Separierung der Elektroden und einen als Ionenleiter zwischen den Elektroden dienenden Elektrolyten umfassen. Dieser Elektrolyt kann flüssig oder fest ausgestaltet sein und, insbesondere bei einer festen Ausgestaltung, auch als Separator fungieren. Die Batteriezellen weisen weiterhin eine Batteriezellenumhüllung auf, die die Batterieelemente umgibt. Die Batteriezellenumhüllung kann vorzugsweise als Folienumhüllung (sogenannte "Pouch"-Umhüllung) oder als Gehäuse, insbesondere als formstabiles Gehäuse ausgestaltet sein. Als "formstabil" gilt ein Gehäuse oder grundsätzlich ein Strukturbauteil, wenn dessen dreidimensionale Form ohne externe Belastung infolge der eigenen Gewichtskraft nicht kollabiert. Vorzugsweise kann ein solches Gehäuse oder Strukturbauteil derart formstabil ausgestaltet sein, dass dieses bei einer Belastung durch externe Kräfte, die bei einer normalen Nutzung auftreten, nicht kollabiert und, besonders bevorzugt, auch nicht in einem relevanten Maße deformiert wird. Die Batteriezellenumhüllungen weisen jeweils mindestens eine Entgasungsöffnung auf, die vorzugsweise (in einem Normalzustand der Batteriezellen) mittels eines Überdruckventils, vorzugsweise in Form eines Berstelements (z.B. eine Berstfolie), das dafür eingerichtet ist, gezielt bei einem definierten Überdruck (z.B. zwischen 5 bar und 6 bar) innerhalb der Batteriezellenumhüllung strukturell zu versagen, verschlossen ist. Die Batteriezellen können weiterhin einen ersten Batteriepol und einen zweiten Batteriepol umfassen, wobei die Batteriepole zur elektrischen Anbindung der jeweiligen Batteriezellen an einen externen Stromkreis vorgesehen sind. Dazu können die Batteriepole derart in die Batteriezellenumhüllung integriert sein, dass ein erster Abschnitt davon außerhalb der Umhüllung angeordnet und dadurch für eine Anbindung an den externen Stromkreis zugänglich ist, während ein zweiter, innerhalb der Batteriezellenumhüllung liegender Abschnitt einer elektrischen Verbindung mit den Batterieelementen dient. Dabei kann eine erste Elektrode des (jedes) Batterieelement(s) mit dem ersten Batteriepol und eine zweite Elektrode des (jedes) Batterieelement(s) mit dem zweiten Batteriepol elektrisch verbunden sein.

Die erfindungsgemäße Batterieeinheit umfasst weiterhin eine vorzugsweise flächige Schutzvorrichtung, die sich entlang der Reihenanordnung der Batteriezellen erstreckt und dabei die (insbesondere alle) Entgasungsöffnungen (vollständig) überdeckt, wobei die Schutzvorrichtung zumindest eine Schaummaterialschicht aufweist, die vorzugsweise ausschließlich aus einem vorzugsweise elastischen Schaumstoff, d.h. einem Material mit zellförmiger Struktur, wobei die Zellen hohl sind, besteht. Vorzugsweise kann vorgesehen sein, dass der Schaumstoff eine geschlossenporige oder gemischtzellige Struktur aufweist. Eine geschlossenporige Zellstruktur umfasst im Wesentlichen ausschließlich Hohlräume die räumlich voneinander getrennt sind. Entsprechend sind die Zellwände zwischen den einzelnen Hohlräumen komplett geschlossen. Eine gemischtzellige Struktur umfasst dagegen sowohl miteinander verbundene als auch räumlich voneinander getrennte Hohlräume. Die Schaummaterialschicht kann vorzugsweise vollflächig geschlossen ausgestaltet sein und sich weiterhin bevorzugt über die gesamte Längs- und Quererstreckung der Schutzvorrichtung erstrecken. Zumindest jedoch sollte die Schaummaterialschicht die Entgasungsöffnungen der Batteriezellen vollständig überdeckend. Die Schaummaterialschicht soll im Falle eines thermisches Durchgehens einer Batteriezelle ein Entgasen dieser Batteriezelle über die dazugehörige Entgasungsöffnung ermöglichen, indem die Schaummaterialschicht lokal im Bereich dieser Entgasungsöffnung definiert und insbesondere relativ widerstandsfrei durch eine über die Entgasungsöffnung aus der Batteriezellenumhüllung austretende Gasströmung zerstört wird und dadurch einen Abbau eines Überdrucks, der sich in dieser Batteriezellenumhüllung gebildet hat, sowie ein Abführen eines diesen Überdruck bewirkenden Gases zu ermöglichen. Dabei schützt die Schutzvorrichtung und insbesondere auch die Schaummaterialschicht davon die benachbarten Batteriezellen vor diesem Gas, das eine sehr hohe Temperatur aufweisen kann, und auch vor darin enthaltenen Partikeln, so dass die Gefahr einer thermischen Propagation bei der Batterieeinheit minimiert werden kann. Das lokal definierte Zerstören der Schaummaterialschicht kann gegebenenfalls auch dadurch unterstützend bewirkt sein, dass die Schaummaterialschicht zumindest in den die Entgasungsöffnungen überdeckenden Abschnitten mindestens eine (für ein definiertes Versagen ausgebildete) Schwachstelle, wie beispielsweise eine vorzugsweise schlitzförmige, vollständige oder teilweise Materialschwächung, aufweist.

Erfindungsgemäß ist weiterhin vorgesehen, dass die Schutzvorrichtung mittels einer Verklebung stoffschlüssig mit den Batteriezellenumhüllungen verbunden ist. Dadurch kann nicht nur eine einfache und somit kostengünstige Montage der Batterieeinheit realisiert werden, sondern durch die Verklebung wird die Schutzwirkung der Schutzvorrichtung hinsichtlich einer thermischen Propagation erhöht, indem ein Unterwandern der Schutzvorrichtung durch ein aus der Entgasungsöffnung einer der Batteriezellen austretenden Gases vermieden wird, wodurch dieses Gas anderenfalls doch in einem zumindest verringerten Umfang in Kontakt mit den weiteren Batteriezellen und insbesondere den dazugehörigen Entgasungsöffnungen, die gegebenenfalls jeweils mit einem nur relativ gering thermisch und mechanisch belastbaren Berstelement verschlossen sind, kommen würde.

Um ein solches Unterwandern der Schutzvorrichtung besonders wirksam zu vermeiden oder zumindest gering zu halten, kann vorzugsweise vorgesehen sein, dass die Festigkeit der Verklebung (Schälung vorzugsweise > 2 N/cm, besonders bevorzugt > 6 N/cm) höher als eine Reißfestigkeit der Schaummaterialschicht ist, so dass gewährleistet ist, dass die Schaummaterialschicht gezielt im Bereich der Entgasungsöffnung einer thermisch durchgehenden Batteriezelle versagt beziehungsweise zerstört wird, bevor es zu einem relevanten Lösen der Verklebung in dem diese Entgasungsöffnung umgebenden Bereich kommt.

Um eine vorteilhafte Schutzwirkung hinsichtlich einer thermischen Propagation ausüben zu können, kann vorzugsweise vorgesehen sein, dass die Schaummaterialschicht flammhemmend und vorzugsweise selbstlöschend ausgestaltet ist. Insbesondere kann diese eine Brennbarkeit der Klasse V-1, vorzugsweise der Klasse V-0 (gemäß DIN EN 60695-11-10 und -20) aufweisen.

Weiterhin bevorzugt kann die Schaummaterialschicht eine relativ hohe Kompressibilität zumindest in Höhenrichtung von beispielsweise mindestens 50%, vorzugsweise von mindestens 75%, beispielsweise 80% aufweisen. Dadurch kann die Schaummaterialschicht vorteilhaft Form- und Lagetoleranzen in der Batterieeinheit ausgleichen und/oder eine relativ gute Dichtwirkung aufweisen.

Weiterhin bevorzugt kann vorgesehen sein, dass die Schutzvorrichtung und insbesondere die Schaummaterialschicht elektrisch isolierend wirksam ist, wodurch eine elektrische Separierung der einzelnen Batteriezellenumhüllungen, die gegebenenfalls elektrisch geladen sein können, bewirkt werden kann.

Vorzugsweise kann vorgesehen sein, die Schaummaterialschicht (teilweise oder vollständig) aus mindestens einem Silikon (bzw. Poly(organo)siloxan) und/oder einem Synthesekautschuk (z.B. EPDM (Ethylen-Propylen-Dien-Kautschuk)) und/oder einem Polyurethan (PUR) und/oder einem Polyolefin (PO)ausgebildet ist. Durch eine Verwendung zumindest eines dieser Materialen können die an die Schaummaterialschicht gestellten Anforderungen vorteilhaft realisiert werden. Mindestens ein flammhemmendes Additiv kann vorzugsweise Bestandteil der Schaummaterialschicht sein.

Weiterhin bevorzugt kann vorgesehen sein, dass die Verklebung mittels eines Haftklebstoffs (hochviskose Flüssigkeit; vorzugsweise in Form eines Transferklebebands oder eines doppelseitig beschichteten Klebebands) und/oder mittels eines nicht-metallischen Prozesswerkstoffs, der Substrate klebend verbindet, ausgebildet ist. Haftklebstoffe umfassen ein dauerklebriges Material, welches unter leichtem Druck eine Haftung zu verschiedenen Oberflächen ausbildet. Eine solche Verklebung zeigt vorteilhafte Eigenschaften hinsichtlich der vorgesehenen Verwendung in einer erfindungsgemäßen Batterieeinheit. Insbesondere kann ein Haftklebstoff (insbesondere auf Acrylatbasis und/oder Silikonbasis und/oder Kautschukbasis) vorteilhaft geeignet sein, ein Verkleben der Schaummaterialschicht mit den Batteriezellenumhüllungen mit einer geforderten Festigkeit zu gewährleisten.

Gemäß einer Ausgestaltungsform einer erfindungsgemäßen Batterieeinheit kann vorgesehen sein, dass mindestens ein Klebstoff zur Ausbildung der Verklebung beidseitig auf einer Trägerschicht angeordnet ist, wobei die Trägerschicht (mit dem Klebstoff) zwischen der Schaummaterialschicht und den Batteriezellenumhüllungen angeordnet ist. Die Trägerschicht kann beispielsweise als Folie ausgestaltet sein. Als "Folie" gilt ein flexibler und damit leicht deformierbarer Körper, dessen Länge und Breite (die die Großflächen der Folien begrenzen) um ein Vielfaches größer als dessen Höhe (d.h. Folienstärke) ist, wobei die Höhe vorzugsweise maximal 1/100 oder 1/500 oder 1/1000 oder 1/10000 oder 1/100000 der Länge und/oder Breite der Folie entsprechen kann. Insbesondere kann eine Folie mit einer so geringen Folienstärke dimensioniert sein, dass diese ohne Abstützung durch die eigene Gewichtskraft erkennbar deformiert würde.

Durch die Verwendung einer solchen Trägerschicht kann eine relativ einfache Montage der Batterieeinheit und insbesondere eine vorteilhafte Handhabung der Schutzvorrichtung realisiert werden. Andererseits kann eine solche Trägerschicht das Versagensverhalten der Schutzvorrichtung im Bereich der Entgasungsöffnungen negativ beeinflussen, so dass es vorteilhaft sein kann, wenn eine solche Trägerschicht nicht verwendet wird und somit zwischen der Schaummaterialschicht und den Batteriezellenumhüllung ausschließlich ein Klebstoff angeordnet ist. Alternativ kann es jedoch auch vorgesehen sein, dass die Trägerschicht zumindest in den die Entgasungsöffnungen überdeckenden Abschnitten eine (definiert versagende) Schwachstelle, wie beispielsweise eine vorzugsweise schlitzförmige, vollständige oder teilweise Materialschwächung, aufweist. Eine vorteilhaft verwendbare Trägerschicht kann auch netzartig und damit mit einer Vielzahl von relativ großen, vorzugsweise mindestens 50% der Gesamtfläche der Trägerschicht ausbildenden Durchgangsöffnungen ausgestaltet sein.

Gemäß einer bevorzugten Ausgestaltungsform einer erfindungsgemäßen Batterieeinheit kann vorgesehen sein, dass die Schutzvorrichtung auf der von den Batteriezellen abgewandten Seite der Schaummaterialschicht eine Zusatzschicht aufweist. Die Zusatzschicht kann vorzugsweise aus PET (Polyethylenterephthalat) ausgebildet sein oder zumindest PET umfassen. Weiterhin kann die Zusatzschicht vorzugsweise als Folie, insbesondere als Klebefolie (einseitiges Klebeband) ausgestaltet sein. Die Zusatzschicht kann beispielsweise eine strukturelle Verstärkung der Schaummaterialschicht bewirken. Alternativ oder ergänzend kann die Zusatzschicht auch eine Abdichtung bewirken beziehungsweise ein Eindringen von Feuchtigkeit in das Schaummaterial der Schaummaterialschicht verhindern. Um zu vermeiden, dass die Zusatzschicht das Versagensverhalten der Schutzvorrichtung im Bereich der Entgasungsöffnungen negativ beeinflusst, kann vorgesehen sein, dass die Zusatzschicht zumindest in den die Entgasungsöffnungen überdeckenden Abschnitten eine (definiert versagende) Schwachstelle, wie beispielsweise eine vorzugsweise schlitzförmige, vollständige oder teilweise Materialschwächung, aufweist.

Die Schutzvorrichtung kann weiterhin bevorzugt auf der von den Batteriezellen abgewandten Seite der Schaummaterialschicht eine Verstärkungsschicht aufweisen, wobei die Verstärkungsschicht zumindest in einem die Entgasungsöffnungen der Batteriezellen überdeckenden Abschnitt mindestens eine Durchgangsöffnung aufweist. Die Verstärkungsschicht kann insbesondere einer strukturellen Verstärkung der Schutzvorrichtung oder der Batterieeinheit insgesamt dienen. Hierzu kann diese vorzugsweise aus Metall und/oder formstabil ausgestaltet sein.

Sofern eine erfindungsgemäße Batterieeinheit sowohl eine Zusatzschicht als auch eine Verstärkungsschicht aufweist, kann vorzugsweise vorgesehen sein, dass die Zusatzschicht zwischen der Schaummaterialschicht und der Verstärkungsschicht angeordnet ist.

Gemäß einer bevorzugten Weiterbildung einer erfindungsgemäßen Batterieeinheit mit einer Verstärkungsschicht kann vorgesehen sein, dass ein vorzugsweise geschlossen umlaufender Randbereich der Schaummaterialschicht von einem die mindestens eine Durchgangsöffnung begrenzenden Randabschnitt der Verstärkungsschicht überdeckt ist, wodurch eine vorteilhafte Abstützung der Schaummaterialschicht in zumindest einem Bereich, der außerhalb einer Überdeckung mit den Entgasungsöffnungen gelegen ist, realisiert werden kann. Weiterhin bevorzugt kann dann noch vorgesehen sein, dass ein ringförmiges Dicht- und/oder Klebeelement, beispielsweise aufgebracht als ringförmige Spur eines pastöses Dicht- und/oder Klebstoffs, in diesem Randabschnitt auf der Schaummaterialschicht zugewandten Seite der Verstärkungsschicht angeordnet ist. Durch dieses Dicht- und/oder Klebeelement kann in vorteilhafter Weise eine Abdichtung erreicht beziehungsweise ein Eindringen von Feuchtigkeit durch die mindestens eine Durchgangsöffnung in die Schutzvorrichtung und zu den Batteriezellen vermieden werden. Alternativ oder ergänzend kann das Dicht- und/oder Klebeelement auch die strukturelle Festigkeit der Schutzvorrichtung sowie der Batterieeinheit insgesamt verbessern. Die vorzugsweise vorgesehene Zusatzschicht kann bei einer solchen Ausgestaltung der Batterieeinheit auch für eine vorteilhafte adhäsive Haftung des Dicht- und/oder Klebeelements an der Schaummaterialschicht sorgen. Dies kann insbesondere dann der Fall sein, wenn diese (auch) aus Silikon ausgebildet ist, weil Silikon aufgrund der nur geringen Oberflächenenergie anderenfalls nur schwierig verklebbar ist.

Die Erfindung betrifft auch in Alleinstellung eine Schutzvorrichtung für eine Batterieeinheit mit den in der Beschreibung und den Patentansprüchen genannten, die Schutzvorrichtung definierenden Merkmalen.

Weiterhin betrifft die Erfindung ein Batteriesystem mit einer erfindungsgemäßen Batterieeinheit oder mehreren erfindungsgemäßen Batterieeinheiten und einem Batteriesystemgehäuse, in dem die Batterieeinheit(en) fixiert aufgenommen ist/sind. Die Verstärkungsschicht(en) der Batterieeinheit(en) können dabei vorzugsweise einen Gehäuseboden des Batteriesystemgehäuses ausbilden.

Die Erfindung betrifft zudem ein Kraftfahrzeug, insbesondere ein elektrisches Kraftfahrzeug mit einem solchen Batteriesystem. Das Batteriesystem kann insbesondere eine Traktionsbatterie oder zumindest ein Teil einer solchen Traktionsbatterie des elektrischen Kraftfahrzeugs sein. Als "elektrisches Kraftfahrzeug" gilt dabei ein Kraftfahrzeug, das zumindest einen elektrischen Traktionsmotor umfasst, durch den ein alleiniger Antrieb des Kraftfahrzeugs möglich ist. Dabei kann das Kraftfahrzeug ausschließlich den mindestens einen elektrischen Traktionsmotor als Antriebsmotor umfassen ("Elektrofahrzeug") oder der mindestens eine elektrische Traktionsmotor kann zusätzlich zu einer anderen Antriebsvorrichtung, insbesondere einer Brennkraftmaschine, vorgesehen sein ("Hybridfahrzeug"). Das Kraftfahrzeug kann insbesondere ein radbasiertes und nicht schienengebundenes Kraftfahrzeug (vorzugsweise ein PKW oder ein LKW) sein.

Die Erfindung wird nachfolgend anhand von in den Zeichnungen dargestellten Ausgestaltungsbeispielen näher erläutert. In den Zeichnungen zeigt, jeweils in vereinfachter Darstellung:
- Fig. 1:: eine Bodengruppe eines Kraftfahrzeugs;
- Fig. 2:: ein erfindungsgemäßes Batteriesystem des Kraftfahrzeugs;
- Fig. 3:: eine Batteriezelle des Batteriesystems;
- Fig. 4:: einen Längsschnitt durch die Batteriezelle;
- Fig. 5:: einen Abschnitt eines Querschnitts durch das Batteriesystem;
- Fig. 6:: einen Abschnitt eines Querschnitts durch das Batteriesystem;
- Fig. 7:: ein Schutzelement für ein erfindungsgemäßes Batteriesystem gemäß einer ersten Ausgestaltungsform;
- Fig. 8:: ein Schutzelement für ein erfindungsgemäßes Batteriesystem gemäß einer zweiten Ausgestaltungsform;
- Fig. 9:: ein Schutzelement für ein erfindungsgemäßes Batteriesystem gemäß einer dritten Ausgestaltungsform;
- Fig. 10:: ein Schutzelement für ein erfindungsgemäßes Batteriesystem gemäß einer vierten Ausgestaltungsform;
- Fig. 11:: ein Schutzelement für ein erfindungsgemäßes Batteriesystem gemäß einer fünften Ausgestaltungsform;
- Fig. 12:: ein Schutzelement für ein erfindungsgemäßes Batteriesystem gemäß einer sechsten Ausgestaltungsform;
- Fig. 13:: eine Ausgestaltungsform des Schutzelements gemäß der zweiten Ausgestaltungsform (Fig. 8) mit schlitzförmigen Schwachstellen, die eine Schaumstoffmaterialschicht des Schutzelements vollständig durchdringen;
- Fig. 14:: eine Ausgestaltungsform des Schutzelements gemäß der zweiten Ausgestaltungsform (Fig. 8) mit die Schaumstoffmaterialschicht nur teilweise (an einer ersten Seite) durchdringenden Schwachstellen;
- Fig. 15:: eine Ausgestaltungsform des Schutzelements gemäß der zweiten Ausgestaltungsform (Fig. 8) mit die Schaumstoffmaterialschicht nur teilweise (an einer zweiten Seite) durchdringenden Schwachstellen.

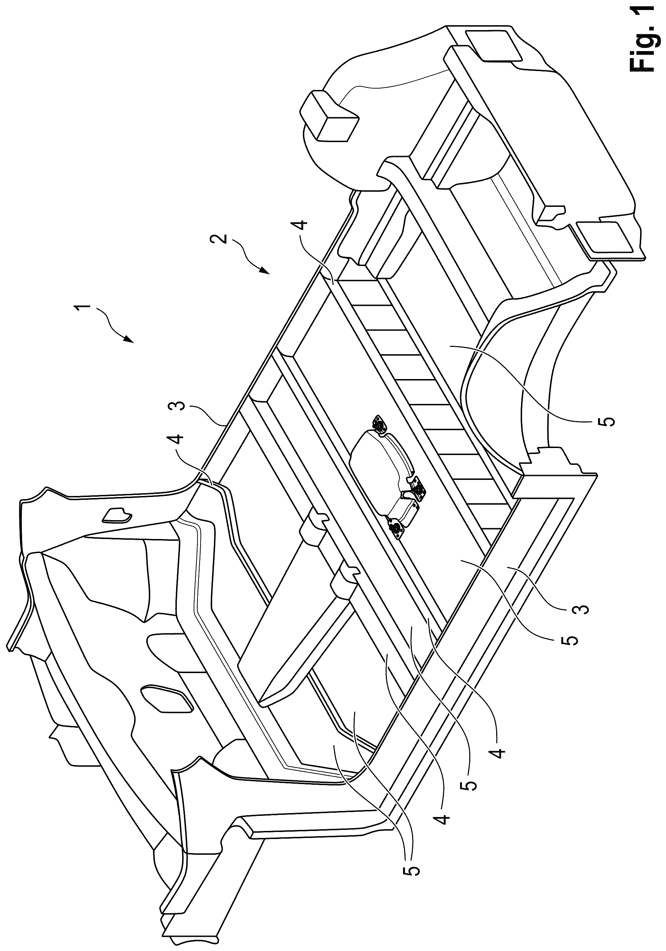

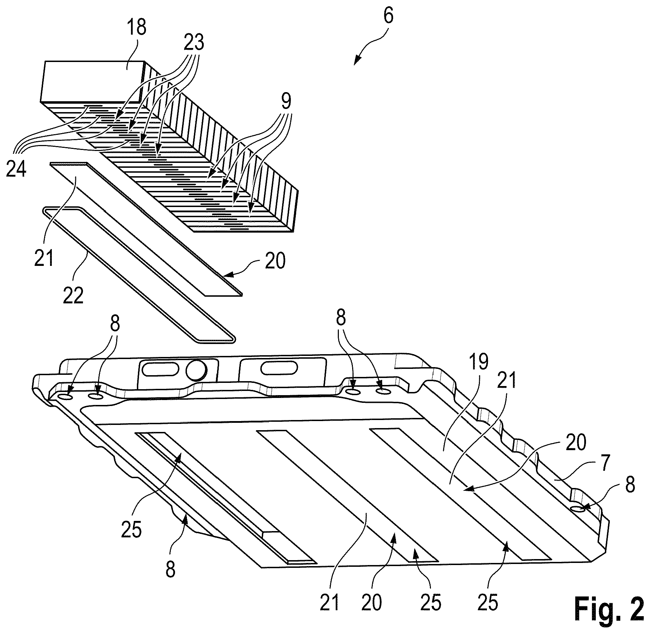

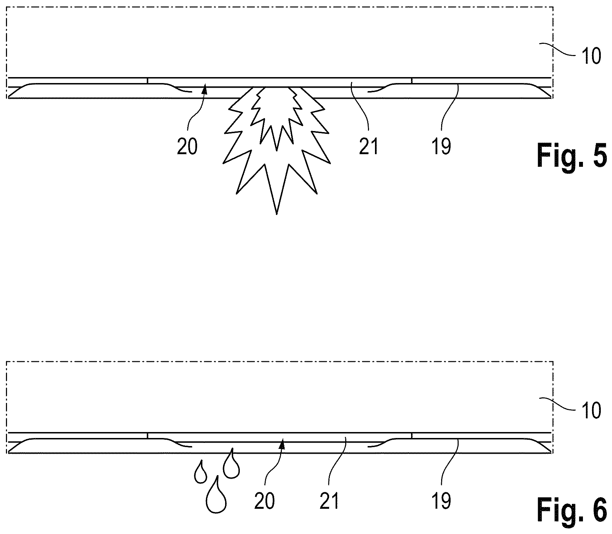

Die Fig. 1 zeigt eine Bodengruppe 1, die ein Teil einer Karosserie für ein elektrisches Kraftfahrzeug ist. Die Bodengruppe 1 stellt bekanntermaßen unter anderem Befestigungspunkte für Komponenten eines Fahrwerks und eines Antriebsstrangs des Kraftfahrzeugs bereit und diese kann zumindest teilweise aus umgeformten Metallblechen gefertigt sein. Der Abschnitt der Bodengruppe, der zwischen zwei Achsen des Kraftfahrzeugs angeordnet ist, wird nachfolgend als Zwischenboden 2 bezeichnet. Dieser Zwischenboden 2 ist unter anderem von Längsträgern 3, Querträgern 4 und Bodenplatten 5 ausgebildet, wobei diese Komponenten einen Aufnahmeraum (nicht sichtbar) begrenzen, der für die Aufnahme eines (Traktions- )Batteriesystems 6 (vgl. Fig. 2 und 5) des Kraftfahrzeugs vorgesehen ist. Dieser Aufnahmeraum und damit das Batteriesystem 6 liegen unterhalb der Bodenplatten 5 des Zwischenbodens 2, wobei unterhalb des Batteriesystems 6 zudem noch eine als Unterfahrschutz dienende, flächige Karosseriestruktur angeordnet ist (nicht sichtbar).

Das Batteriesystem 6 ist in der Fig. 2 dargestellt. Dieses weist ein Batteriesystemgehäuse auf, das einen Halterahmen 7 umfasst, der Verbindungsöffnungen 8 ausbildet, über die der Halterahmen 7 und damit das Batteriesystem 6 mit Längsträgern 3 und Querträgern 4 des Zwischenbodens 2 verbunden sind beziehungsweise werden können. Das Batteriesystemgehäuse umfasst weiterhin noch einen Gehäuseboden 19 sowie einen Gehäusedeckel (nicht dargestellt). Innerhalb des Batteriesystemgehäuses sind eine Vielzahl von Batteriezellen 9 angeordnet, die elektrisch miteinander verschaltet sind, um im Verbund (als Traktionsbatterie) einem elektrischen Traktionsmotor (nicht dargestellt) des Kraftfahrzeugs eine ausreichend große elektrische Leistung für einen Antrieb des Kraftfahrzeugs zur Verfügung stellen zu können.

Die Batteriezellen 9 sind als sogenannte prismatische Batteriezellen 9 ausgestaltet und weisen demnach ein quaderförmiges Batteriezellengehäuse 10, das beispielsweise aus einem Metall (z.B. Aluminium) ausgebildet sein kann, auf. Das Batteriezellengehäuse 10 kann außenseitig mit einer Funktionsschicht, insbesondere einer (elektrisch isolierend wirksamen) Isolationsschicht versehen sein.

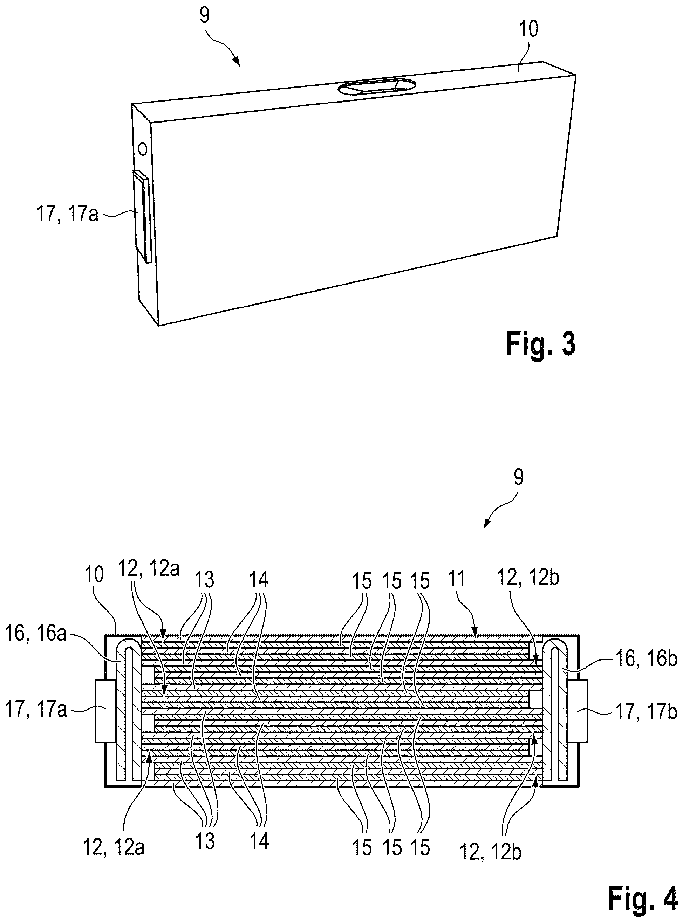

In dem Batteriezellengehäuse 10 sind Batterieelemente aufgenommen (vgl. Fig. 4). Konkret liegen die Batterieelemente dabei gestapelt in Form eines Elektroden-Separatoren-Verbunds (ESV) 11 vor. Alternativ kann aber auch eine gewickelte Anordnung der Batterieelemente vorgesehen sein. Der ESV 11 umfasst in wechselweiser Anordnung eine Mehrzahl von ersten Elektroden 12a, die bei einer Entladung der Batteriezelle 9 als Anoden fungieren, und eine Mehrzahl von zweiten Elektroden 12b, die bei einer Entladung der Batteriezelle 9 als Kathoden fungieren. Infolge der wechselweisen Anordnung der Elektroden 12 ist, mit Ausnahme der beiden in dem Stapel beziehungsweise dem ESV 11 außen gelegenen Elektroden 12, jeweils eine erste Elektrode 12a zwischen zwei zweiten Elektroden 12b und eine zweite Elektrode 12b zwischen zwei ersten Elektroden 12a angeordnet. Dabei sind benachbarte Elektroden 12 jeweils durch einen Separator 13 räumlich getrennt und dadurch auch voneinander elektrisch isoliert. Jeweils eine erste Elektrode 12a und eine zweite Elektrode 12b sowie ein zwischen diesen angeordneter Separator 13, der mit einem Elektrolyten getränkt ist, bilden ein Batterieelement aus. Durch den Elektrolyten ist eine Leitung von Ionen zwischen benachbarten Elektroden 12 über den jeweils dazwischen liegenden Separator 13 möglich.

Jede der Elektroden 12 umfasst ein flächiges, folienförmiges Substrat 14, das beispielsweise bei den als Anoden vorgesehenen ersten Elektroden 12a aus Kupfer und bei den als Kathoden vorgesehenen zweiten Elektroden 12b aus Aluminium ausgestaltet sein kann. In einem rechteckigen Abschnitt davon sind die beiden in Stapelrichtung des ESV 11 gelegenen Großflächen jeder der Elektroden 12 mit einer Beschichtung aus einem Aktivmaterial 15 versehen, um eine Wirkung der verschiedenen Elektroden 12a, 12b als Anoden oder Kathoden während einer Nutzung der Batteriezelle 9 zu ermöglichen. Zumindest im Bereich dieser rechteckigen Abschnitte der Substrate 14 und damit der Elektroden 12 sind diese und die entsprechend rechteckig geformten Separatoren 13 gestapelt, woraus sich die Quaderform des ESV 11 ergibt.

An einer Querseite des rechteckigen Abschnitts jeder Elektrode 12 ist ein Bereich des Substrats 14 vorgesehen, in dem dieses nicht mit der Beschichtung aus dem jeweiligen Aktivmaterial 15 versehen ist. Dieser Bereich der Elektroden 12 dient jeweils als Stromableiter 16, über den die einzelnen Elektroden 12 mit einem jeweils zugeordneten Batteriepol 17 der Batteriezelle 9 direkt oder indirekt elektrisch leitend verbunden sind. Die Stromableiter 16a von allen ersten Elektroden 12a sind dabei mit einem ersten (17a) der Batteriepole 17 und die Stromableiter 16b von allen zweiten Elektroden 12b sind mit einem zweiten (17b) der Batteriepole 17 verbunden.

Die Batteriezellengehäuse 10 der Batteriezellen 9 weisen jeweils in einem zentralen Abschnitt einer ihrer Längsseiten eine Entgasungsöffnung 23 aus, die mittels eines als Überdruckventil dienenden, folienförmigen Berstelements 24 überdeckt und dadurch verschlossen ist. Das Berstelement 24 ist jeweils dazu vorgesehen und entsprechend ausgelegt, dass dieses im Falle eines thermischen Durchgehens der Batterieelemente ein unkontrolliertes Bersten des Batteriezellengehäuses 10 vermeidet, indem ein Gas, das sich infolge des thermischen Durchgehens innerhalb des Batteriezellengehäuses 10 ausbildet und das zu einer relativ großen Druckerhöhung führt, über das dann gezielt zerreißende Berstelement 24 in die Umgebung abgeführt wird.

Die Batteriezellen 9 des Batteriesystems 6 sind in insgesamt drei Batteriezellengruppen unterteilt, die jeweils in einer Reihenanordnung in einer Tragstruktur 18 des Batteriesystems 6 aufgenommen sind. Zwischen jeweils zwei der Batteriezellen 9 ist eine Zellzwischenlage (nicht sichtbar) angeordnet.

Die Batteriezellengruppen mit der dazugehörigen Tragstruktur 18 sowie jeweils einer Schutzvorrichtung bilden jeweils eine erfindungsgemäße Batterieeinheit aus.

Die Schutzvorrichtung umfasst jeweils ein Schutzelement 20, das zumindest eine Schaummaterialschicht 21 umfasst, ein ringförmiges Dicht- und Klebeelement 24 sowie einen zugeordneten Abschnitt des Gehäusebodens 19 des Batteriesystemgehäuses (als Verstärkungsschicht der jeweiligen Batterieeinheit).

Das quaderförmige, flächige (d.h. mit einer im Vergleich zu den Längs- und Breitenerstreckungen relativ geringen Höhenerstreckung) Schutzelement erstreckt sich entlang der gesamten Reihenanordnung der Batteriezellen 9, wobei dieses die Entgasungsöffnungen aller Batteriezellen 9 der Batterieeinheit überdeckt. Die Entgasungsöffnungen 23 der Batteriezellen 9 der einzelnen Batterieeinheiten und damit auch ein zentraler Abschnitt des jeweils zugehörigen Schutzelements 2420 sind im montierten Zustand des Batteriesystems im Bereich jeweils einer länglichen Durchgangsöffnung 25 des Gehäusebodens 19 des Batteriesystemgehäuses angeordnet. Dadurch wird ermöglicht, dass bei einem thermischen Durchgehen einer der Batteriezellen 9 und einer dadurch bewirkten Zerstörung des zugehörigen Berstelements 24 sowie des angrenzenden Abschnitts des Schutzelements 20 das aus dieser Batteriezelle 9 austretende Gas über die zugeordnete Durchgangsöffnung 25 des Gehäusebodens 19 aus dem Batteriesystemgehäuse abgeführt wird (vgl. Fig. 5). Dadurch wird die Gefahr minimiert, dass dieses austretende Gas, das eine sehr hohe Temperatur aufweisen und zudem auch Partikel mitführen kann, die angrenzenden Batteriezellen 9 beschädigen und somit zu einer thermischen Propagation führen kann.

Ein Überströmen dieses Gases aus dem Bereich der Entgasungsöffnung 23 der thermisch durchgehenden Batteriezelle 9 zu den angrenzenden Batteriezellen 9 wird dabei dadurch möglichst sicher verhindert, dass das Schutzelement 20 mit den Batteriezellengehäusen 10 verklebt ist und zudem in einem geschlossen umlaufenden Randabschnitt zwischen den Batteriezellengehäusen 10 und dem Gehäuseboden 19 des Batteriesystemgehäuses verspannt beziehungsweise komprimiert aufgenommen ist. Das Dicht- und Klebeelement 22 ist dabei ebenfalls in diesem Randbereich verspannt beziehungsweise komprimiert zwischen dem Schutzelement 20 und dem Gehäuseboden 19 angeordnet und dichtet den zwischen diesen Komponenten ausgebildeten Spalt wirkungsvoll ab. Diese Abdichtung verhindert nicht nur ein Überströmen von aus einer thermisch durchgehenden Batteriezelle 9 ausströmendem Gas zu den benachbarten Batteriezellen 9, sondern auch ein Eindringen von Feuchtigkeit aus der Umgebung in das Batteriesystemgehäuse (vgl. Fig. 6), was von besonderer Bedeutung ist, weil die Unterseite des Batteriesystemgehäuses, wie beschrieben, einen Abschnitt der Unterseite des Kraftfahrzeugs ausbildet und dabei gegebenenfalls nur noch durch die als Unterfahrschutz dienende, Karosseriestruktur abgedeckt ist, wobei diese Abdeckung jedoch nicht vollständig abdichtend ausgeführt sein kann.

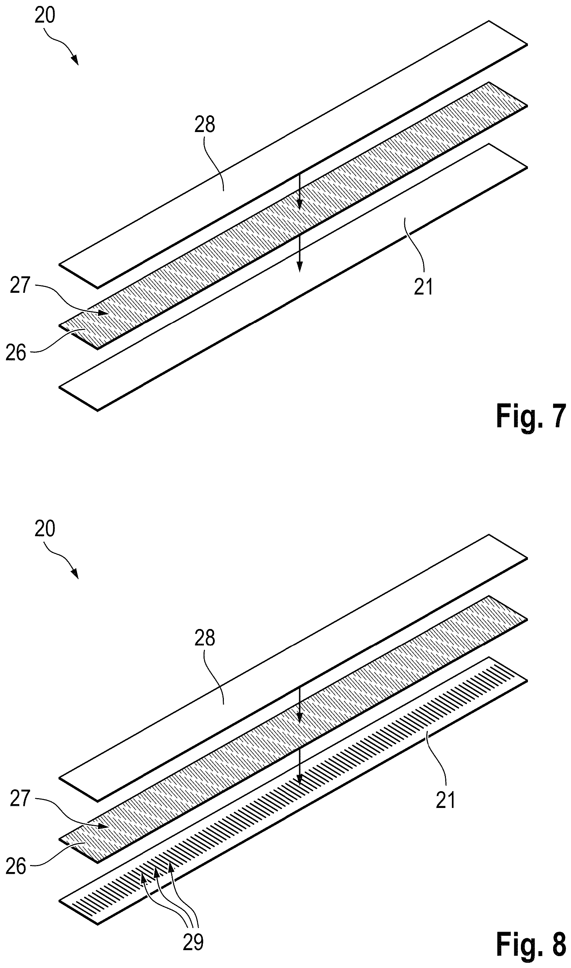

Die Fig. 7 bis 13 zeigen unterschiedliche Ausgestaltungsformen des Schutzelements 20.

Das Schutzelement 20 gemäß der Fig. 7 umfasst die Schaummaterialschicht 21 sowie eine Trägerschicht 26, die beidseitig vollflächig mit einer Schicht eines Klebstoffs 27 versehen ist, um die Schaummaterialschicht 21 mit den angrenzenden Abschnitten der Batteriezellengehäuse 10 zu verkleben. Dargestellt ist weiterhin eine folienförmige Trennschicht 28, die in einem Ausgangszustand des Schutzelements 20, d.h. vor einem Verkleben mit den Batteriezellengehäusen 10, auf der von der Schaummaterialschicht 21 abgewandten Seite der Trägerschicht 26 angeordnet ist und als Schutz für den dort angeordneten Klebstoff 27 dient. Vor einem Verkleben des Schutzelements 20 mit den Batteriezellengehäusen 10 wird diese Trennschicht 28 entfernt, um eine Adhäsionswirkung des Klebstoffs an den Batteriezellengehäusen 10 zu ermöglichen.

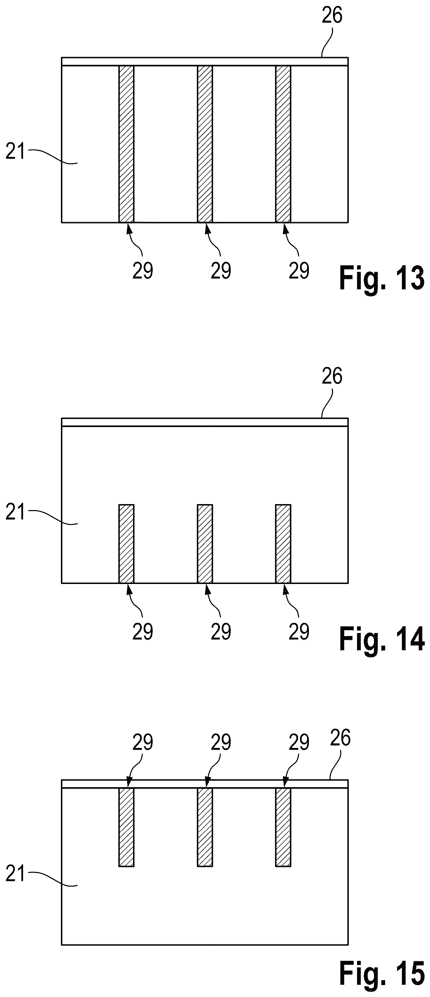

Das in der Fig. 8 dargestellte Schutzelement 20 unterscheidet sich von demjenigen gemäß der Fig. 7 darin, dass die Schaummaterialschicht 21 mit einer Vielzahl von schlitzförmigen Schwachstellen 29 ausgestaltet ist, wobei diese Schwachstellen 29 beziehungsweise Schlitze die Schaummaterialschicht 21 vollständig oder teilweise (bezüglich der Höhenerstreckung; vgl. Fig. 13 bis 15) durchdringen. Die schlitzförmigen Schwachstellen 29 verlaufen in Querrichtung der Schaummaterialschicht 21 beziehungsweise des Schutzelements 20 insgesamt.

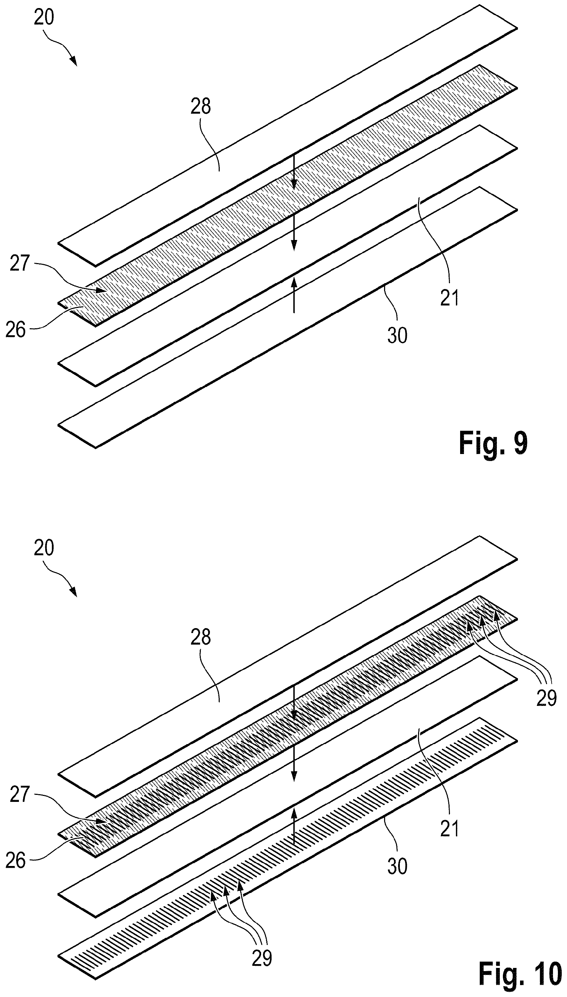

Das in der Fig. 9 dargestellte Schutzelement 20 unterscheidet sich von demjenigen gemäß der Fig. 7 darin, dass auf der von der Trägerschicht 26 abgewandten Seite der Schaummaterialschicht 21, die dem Gehäuseboden 19 des Batteriesystemgehäuses zugewandt ist, eine Zusatzschicht 30 vorgesehen ist, durch die insbesondere eine gut wirksame Abdichtung des Batteriesystems hinsichtlich eines Eindringens von Feuchtigkeit über die Durchgangsöffnungen 25 des Gehäusebodens 19 des Batteriesystemgehäuses erreicht werden kann. Diese Zusatzschicht 30, die beispielsweise aus PET bestehen kann, kann insbesondere auch vorteilhaft mit dem Dicht- und Klebeelement 22 zusammenwirken, um unter anderem eine vorteilhafte Klebewirkung zwischen diesen Komponenten und damit zwischen dem Schutzelement und dem Gehäuseboden 19 zu realisieren.

Das Schutzelement 20 gemäß der Fig. 10 umfasst ebenfalls eine solche Zusatzschicht 30, wobei abweichend von der Ausgestaltungsform gemäß der Fig. 9 sowohl die Trägerschicht 26 als auch die Zusatzschicht 30 mit einer Vielzahl von in Querrichtung des Schutzelements 20 verlaufenden, schlitzförmigen Schwachstellen 29 ausgestaltet sind.

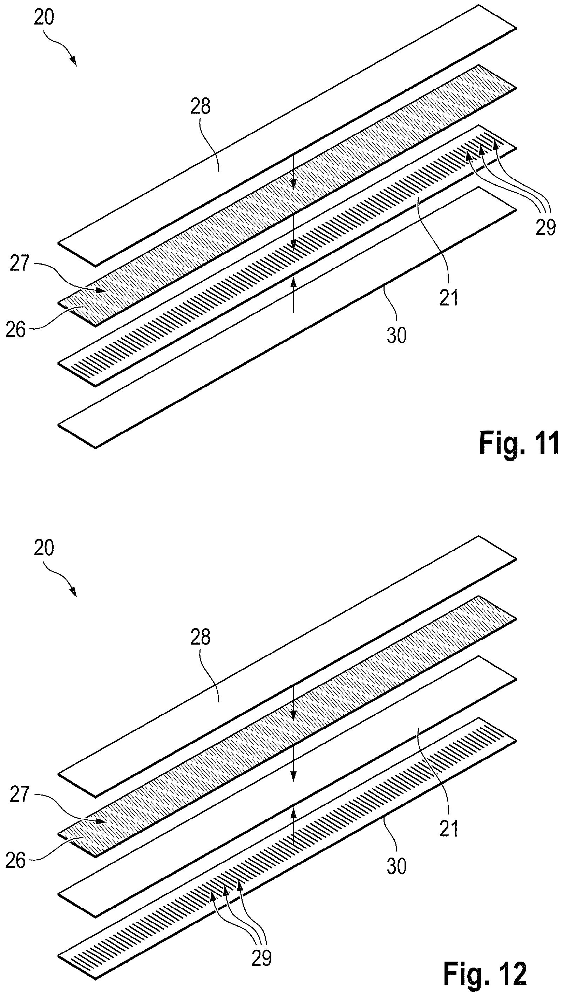

Das Schutzelement 20 gemäß der Fig. 11 unterscheidet sich von demjenigen gemäß der Fig. 8 durch eine zusätzlich vorhandene Zusatzschicht 30 ohne Schwachstellen 29, wie sie auch bei dem Schutzelement 20 gemäß der Fig. 9 vorgesehen ist.

Das Schutzelement 20 gemäß der Fig. 12 unterscheidet sich von demjenigen gemäß der Fig. 9 dadurch, dass die Zusatzschicht 30 mit einer Vielzahl von in Querrichtung des Schutzelements 20 verlaufenden, schlitzförmigen Schwachstellen 29 ausgestaltet ist.

Anstelle der Trägerschicht 26 (mit oder ohne Schwachstellen 29) kann bei sämtlichen Ausgestaltungsformen auch lediglich eine Schicht des Klebstoffs 27 vorgesehen sein, die die angrenzende Seite der Schaummaterialschicht 21 vorzugsweise vollflächig bedeckt.

Mit Ausnahme der gegebenenfalls vorhandenen Schwachstellen 29 sind die verschiedenen Schichten der dargestellten Schutzelemente 20 vorzugsweise vollflächig und damit öffnungsfrei ausgestaltet.

Die verschiedenen Schichten der Schutzelemente 20 können, wie dargestellt, jeweils rechteckige Großflächen aufweisen, die zudem gleiche Abmessungen haben können. Beispielhafte Abmessungen der Großflächen können sein: Länge: 1100 mm bis 1200 mm; Breite: 100 mm bis 150 mm. Für die Trennschicht 28 kann es jedoch vorteilhaft sein, wenn diese hinsichtlich der Längs- und/oder Quererstreckung ein Übermaß gegenüber zumindest der Trägerschicht 26 (sofern vorhanden) und/oder der Schaummaterialschicht 21 aufweist, um ein Entfernen vor einem Verkleben mit den Batteriezellegehäusen 10 zu vereinfachen. Die schlitzförmigen Schwachstellen können beispielsweise eine Schlitzlänge von 65 mm aufweisen. Die Abstände zwischen diesen Schwachstellen 31 kann beispielsweise 8 mm betragen.

Das Schaummaterial der Schaummaterialschichten 21 kann vorzugsweise aus Silikon, Synthesekautschuk, PUR oder PO bestehen. Eine vorteilhafte Schichtdicke (Erstreckung in Höhenrichtung) der Schaummaterialschicht 21 kann beispielsweise 3,5 mm bis 4 mm betragen.

### Bezugszeichenliste

- 1: Bodengruppe
- 2: Zwischenboden
- 3: Längsträger
- 4: Querträger
- 5: Bodenplatte
- 6: Batteriesystem
- 7: Gehäuserahmen
- 8: Verbindungsöffnung
- 9: Batteriezelle
- 10: Batteriezellengehäuse
- 11: Elektroden-Separatoren-Verbund (ESV)
- 12: Elektrode
- 12a: erste Elektrode
- 12b: zweite Elektrode
- 13: Separator
- 14: Substrat
- 15: Aktivmaterial
- 16: Stromableiter
- 16a: erster Stromableiter
- 16b: zweiter Stromableiter
- 17: Batteriepol
- 17a: erster Batteriepol
- 17b: zweiter Batteriepol
- 18: Tragstruktur
- 19: Gehäuseboden
- 20: Schutzelement
- 21: Schaummaterialschicht
- 22: Dicht- und Klebeelement
- 23: Entgasungsöffnung
- 24: Berstelement
- 25: Durchgangsöffnung des Gehäusebodens
- 26: Trägerschicht
- 27: Klebstoff
- 28: Trennschicht
- 29: Schwachstelle
- 30: Zusatzschicht

## Patentansprüche

1. Batterieeinheit mit einer Mehrzahl von Batteriezellen (9), die in einer Reihenanordnung angeordnet sind, wobei die Batteriezellen (9) jeweils eine Mehrzahl von Batterieelementen und eine Batteriezellenumhüllung, die die Batterieelemente umgibt und die eine Entgasungsöffnung (23) aufweist, umfasst, und mit einer Schutzvorrichtung, die sich entlang der Reihenanordnung der Batteriezellen (9) erstreckt und dabei die Entgasungsöffnungen (23) überdeckt, wobei die Schutzvorrichtung zumindest eine Schaummaterialschicht (21) aufweist, **dadurch gekennzeichnet, dass** die Schutzvorrichtung mittels einer Verklebung stoffschlüssig mit den Batteriezellenumhüllungen (10) verbunden ist.

2. Batterieeinheit gemäß Anspruch 1, **dadurch gekennzeichnet, dass** die Festigkeit der Verklebung höher als eine Reißfestigkeit der Schaummaterialschicht (21) ist.

3. Batterieeinheit gemäß Anspruch 1 oder 2, **dadurch gekennzeichnet, dass** die Schaummaterialschicht (21) eine Brennbarkeit der Klasse V-1 oder V-0 gemäß DIN EN 60695-11-10 und -20 aufweist und/oder elektrisch isolierend wirksam ist.

4. Batterieeinheit gemäß einem der vorhergehenden Ansprüche, **dadurch gekennzeichnet, dass** die Schaummaterialschicht (21) teilweise oder vollständig aus einem Silikon und/oder einem Synthesekautschuk und/oder einem Polyurethan und/oder einem Polyolefin ausgebildet ist und/oder ein flammhemmendes Additiv umfasst.

5. Batterieeinheit gemäß einem der vorhergehenden Ansprüche, **dadurch gekennzeichnet, dass** die Verklebung mittels eines Haftklebstoffs (27) ausgebildet ist.

6. Batterieeinheit gemäß einem der vorhergehenden Ansprüche, **dadurch gekennzeichnet, dass** mindestens ein Klebstoff (27) zur Ausbildung der Verklebung beidseitig auf einer Trägerschicht (26) angeordnet ist oder zwischen den Batteriezellenumhüllungen und der Schaummaterialschicht (21) ausschließlich ein Klebstoff (27) angeordnet ist.

7. Batterieeinheit gemäß einem der vorhergehenden Ansprüche, **dadurch gekennzeichnet, dass** die Schutzvorrichtung auf der von den Batteriezellen (9) abgewandten Seite der Schaummaterialschicht (21) eine Zusatzschicht (30) aufweist.

8. Batterieeinheit gemäß Anspruch 7, **dadurch gekennzeichnet, dass** die Zusatzschicht (30) aus PET ausgebildet ist.

9. Batterieeinheit gemäß einem der vorhergehenden Ansprüche, **dadurch gekennzeichnet, dass** die Schutzvorrichtung auf der von den Batteriezellen (9) abgewandten Seite der Schaummaterialschicht (21) eine Verstärkungsschicht aufweist, wobei die Verstärkungsschicht zumindest in Überdeckung mit den Entgasungsöffnungen (23) der Batteriezellen (9) mindestens eine Durchgangsöffnung (25) aufweist.

10. Batterieeinheit gemäß Anspruch 9, **dadurch gekennzeichnet, dass** ein Randbereich der Schaummaterialschicht (21) von einem die mindestens eine Durchgangsöffnung (25) begrenzenden Randabschnitt der Verstärkungsschicht überdeckt ist.

11. Batterieeinheit gemäß Anspruch 10, **dadurch gekennzeichnet, dass** ein Dicht- und/oder Klebeelement (22) in dem Randabschnitt auf der der Schaummaterialschicht (21) zugewandten Seite der Verstärkungsschicht angeordnet ist.

12. Batterieeinheit gemäß einem der vorhergehenden Ansprüche, **dadurch gekennzeichnet, dass** die Schaummaterialschicht (21) und/oder die Zusatzschicht (30) und/oder die Trägerschicht (26) mindestens eine definierte Schwachstelle (29) aufweist, die in einem mindestens eine der Entgasungsöffnungen (23) überdeckenden Abschnitt angeordnet ist.

13. Schutzvorrichtung für eine Batterieeinheit gemäß einem der vorhergehenden Ansprüche mit den darin genannten, die Schutzvorrichtung definierenden Merkmalen.

14. Batteriesystem mit einer Batterieeinheit oder mehreren Batterieeinheiten gemäß einem der Ansprüche 1 bis 13 und einem Batteriesystemgehäuse, in dem die Batterieeinheit(en) fixiert aufgenommen ist/sind.

15. Batteriesystem gemäß Anspruch 9 oder einem der von Anspruch 9 abhängigen Ansprüche und gemäß Anspruch 14, **dadurch gekennzeichnet, dass** die Verstärkungsschicht(en) der Batterieeinheit(en) einen Gehäuseboden (19) des Batteriesystemgehäuses ausbilden.
